# EUROPEAN PATENT SPECIFICATION

(11) **EP 3 671 104 B1**
(45) Date of publication and mention of the grant of the patent: **08.02.2023**
(21) Application number: 18213923.8
(22) Date of filing: 19.12.2018
(51) Int. Cl.: G01B 3/42, G01B 5/14

(54) **INSPECTION TOOL FOR A SAFETY DEVICE OF A WHIPLASH PROTECTION SYSTEM AND CORRESPONDING INSPECTION AND MANUFACTURING METHODS**
INSPEKTIONSWERKZEUG FÜR EINE SICHERHEITSVORRICHTUNG EINES SCHLEUDERTRAUMASCHUTZSYSTEMS UND ENTSPRECHENDE INSPEKTIONS- UND HERSTELLUNGSVERFAHREN
OUTIL D'INSPECTION D'UN DISPOSITIF DE SÉCURITÉ D'UN SYSTÈME DE PROTECTION DE COUP DU LAPIN ET MÉTHODES D'INSPECTION ET DE FABRICATION CORRESPONDANTES

(43) Date of publication of application: 24.06.2020
(73) Proprietor: Volvo Car Corporation, 405 31 Göteborg (SE)
(72) Inventor: BOSTRÖM, Stefan, SE-405 31 GÖTEBORG (SE); KARLSSON, Markus, SE-421 70 VÄSTRA FRÖLUNDA (SE); SVENSSON, Christian, SE-405 31 GÖTEBORG (SE)
(74) Representative: Kransell & Wennborg KB

(56) References cited:
- WO-A1-2009/091300
- WO-A1-2011/112123
- CN-A- 104 315 937
- GB-A- 2 330 068
- GB-A- 2 396 420
- KR-A- 20150 063 697
- US-A- 5 509 208
- US-A1- 2013 175 833
- US-A1- 2013 307 301
- US-A1- 2016 075 262
- US-A1- 2018 229 629

## Description

### Field of the Invention

The present disclosure relates to an inspection tool for inspecting the status of a safety device which is adapted to be triggered by stress exceeding a threshold.

### Background

Whiplash protection devices are widely used in the automotive industry. A whiplash protection device is triggered by high stress and functions by being controllably deformed in the event of a collision of sufficient magnitude. The deformation causes a motion of the vehicle seat in a way that reduces the risk of a whiplash injury of an occupant situated in the vehicle seat. Generally, a whiplash injury is caused by a rapid acceleration of a vehicle occupant's head backwards at the same time as the torso of the occupant is accelerated forward.

After a collision the whiplash protection device must be inspected in order to determine if it has been triggered and therefore must be replaced. The components of the whiplash protection device are visually inspected after they have been uncovered by various lids or other mechanical parts. It may even require removal of the vehicle seat from the vehicle. If the components of the whiplash protection system are intact, the vehicle seat may be kept, otherwise the vehicle seat is replaced. An example of a device for protecting an occupant is described in US2013/0175833 which discloses an energy absorbing bracket for a seat of a vehicle. Further, WO2009/091300 discloses an anti-whiplash mechanism, and KR20150063697 discloses a rear collision impact alleviation equipment for a car seat.

The inspection of the whiplash protection device is time consuming and costly. It is therefore desirable to provide a more efficient way of inspecting the status of a whiplash protection system, or any other system operative by an intended component deformation.

### Summary

The present disclosure describes an inspection tool for inspecting the status of a safety device which is adapted to be triggered by stress exceeding a threshold. The proposed inspection tool enables an efficient inspection procedure for inspecting the status of the safety device. Furthermore, with the herein disclosed inspection tool less invasive actions are necessary for inspecting some safety devices, such as for example safety devices comprised in whiplash protection systems.

The advantage is provided by the provision of a first fitting element and a second fitting element arranged with a predetermined fixed displacement relative each other. The fixed relative displacement, and thus the relative positions of the first fitting element and the second fitting element is selected so that they simultaneously match with corresponding two safety device reference points as positioned when the safety device is in an un-triggered state.

As long as the safety device is in the un-triggered state the relative position of the safety device reference points are maintained so that the relative positions of the first fitting element and the second fitting element of the inspection tool matches the safety device reference points. In this way, by using the inspection tool, it can quickly be determined that the safety device has not been triggered.

However, if the safety device is exerted to high stress so that triggers, a deformation of the safety device causes the positions of the safety device reference points relative each other to be altered. In other words, one of the reference points will have been displaced with respect to the other reference point when the safety device has been triggered. Accordingly, when the safety device has been triggered, the relative positions of the first fitting element and the second fitting element do not match the safety device reference points. In this way, by using the inspection tool, it can quickly be determined that the safety device has been triggered.

Both the safety device reference points need not be on the actual safety device itself. However, the reference points must be fixed in relation to a respective portion of the safety device, where the locations of the safety device portions are altered by a deformation of the safety device in response to it being triggered. Accordingly, an altered relative position of the safety device reference points should relate to that the safety device has been triggered.

Advantageously, the relative positions of the fitting elements are configured to simultaneously match with corresponding two safety device reference points only when the safety device is in an un-triggered state. This also means that the relative positions of the fitting elements are configured to not match with the corresponding two safety reference points when the safety device has been triggered.

In one possible embodiment, the inspection tool is configured to work together with a safety device which is comprised in a vehicle seat. Such a safety device is preferably comprised in a whiplash protection system. In such an implementation, the inspection tool is configured for inspecting the status of the safety device without removing the vehicle seat from the vehicle and with less need for removing lids and covers. Thereby, the time consuming process of removing the vehicle seat from the vehicle can be avoided when investigating the status of the safety device.

Importantly, the safety device when comprised in a whiplash protection system also does not have to be completely uncovered in order for the inspection tool to be used for investigating the status of the safety device. Once the two safety device reference points are found the inspection tool fitting elements can be attempted to be matched with the positions of the safety device reference points in order to determine the status of the safety device.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Figs. 1a-b conceptually illustrates the principle operation of embodiments of the present invention;
Fig. 2a-b are perspective views of an example inspection tool according to embodiments of the invention;
Fig. 2c is illustrates a further example inspection tool according to embodiments of the invention;
Fig. 3 illustrates a possible implementation of an example inspection tool;
Fig. 4 is another view of possible implementation shown in fig. 3;
Figs. 5a-b illustrates the operation of an example inspection tool for the implementation illustrated in figs. 3 and 4;
Fig. 6 illustrates a further example inspection tool; and
Fig. 7 is a flow-chart of method steps according to embodiments of the invention; and
Fig. 8 is a flow-chart of method steps for manufacturing an inspection tool according to embodiments of the invention.

### Detailed Description of Example Embodiments

In the present detailed description, various embodiments of the inspection tool according to the present invention are described. However, this invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

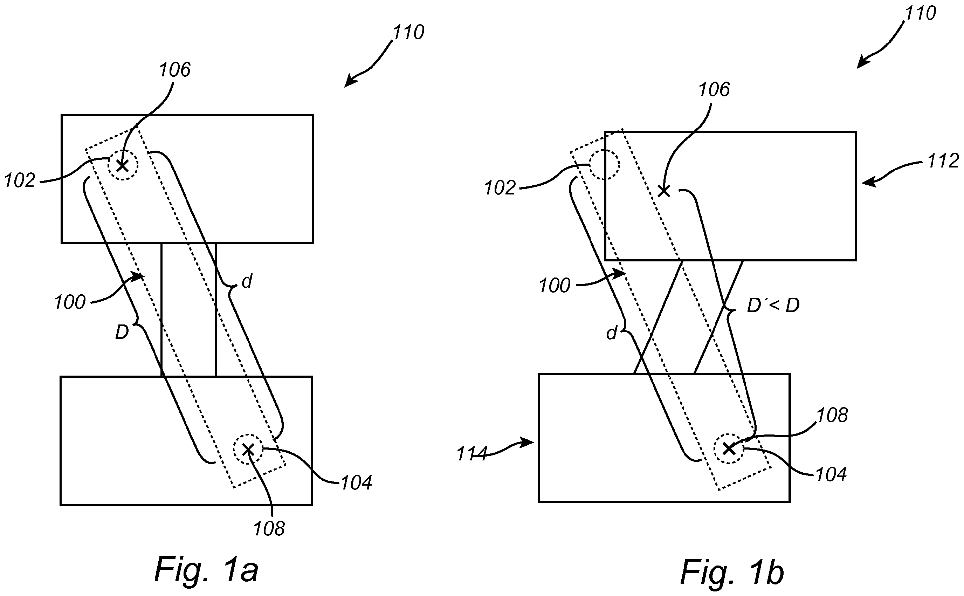

Figs. 1a-b conceptually illustrates embodiments of the present disclosure. Accordingly, figs. 1a-b conceptually illustrates an inspection tool 100 comprising a first fitting element 102 and a second fitting element 104. The first fitting element 102 and the second fitting element 104 are arranged with a predetermined fixed relative displacement d. Figs. 1a-b further shows a first safety device reference point 106 and a second safety device reference point 108. It should be noted that the both of the safety device reference points do not have to be on the safety device 110 itself as long as a relative position of the reference points can be found and are altered in response to a deformation of the safety device 110.

The relative positions of the fitting elements 102 and 104 are configured to simultaneously match with the corresponding two safety device reference points 106 and 108 when the safety device is in an un-triggered state. In other words, in the un-triggered state the distance D between the first safety device reference point 106 and the second safety device reference point 108 substantially matches the distance d.

In fig. 1a, the relative positions of the fitting elements 102 and 104 are shown to simultaneously match the safety device reference points 106 and 108. Thereby, the safety device 110 as shown in fig. 1a can advantageously be concluded to be in an un-triggered state.

The safety device 110 is configured to deform in the event of it being exerted to high stress exceeding some stress threshold. Accordingly, in the event of the safety device 110 having been triggered and therefore deformed the relative positions of the safety device reference points 106 and 108 in relation to each other will have been altered. This is illustrated in fig. 1b where one portion 112 of the safety device 110 including the reference point 106 have been moved with respect to the portion 114 including the reference point 108. As shown, the distance between the reference points 106 and 108 is now D' which is smaller than the original distance D. This means that the distance D' between the first safety device reference point 106 and the second safety device reference point 108 deviates form the distance d. In this triggered state of the safety device 110, the positions of the fitting elements 102 and 104 do not simultaneously match the corresponding two safety reference points 106 and 108 even if the inspection tool 100 is moved around.

The inspection tool 100 is thus able to inspect the status of the safety device by investigating the relative positions of the reference points 106 and 108. The investigation can be performed without the need for excessive disassembly of vehicle components as will be further described below. Thus, the provision of the inspection tool 100 having two fitting elements 102 and 104 which locations are fixed with respect to each other and adapted to match with the reference points 106 and 108 only when the safety device is in an un-triggered state provides for a quick inspection of the safety device status.

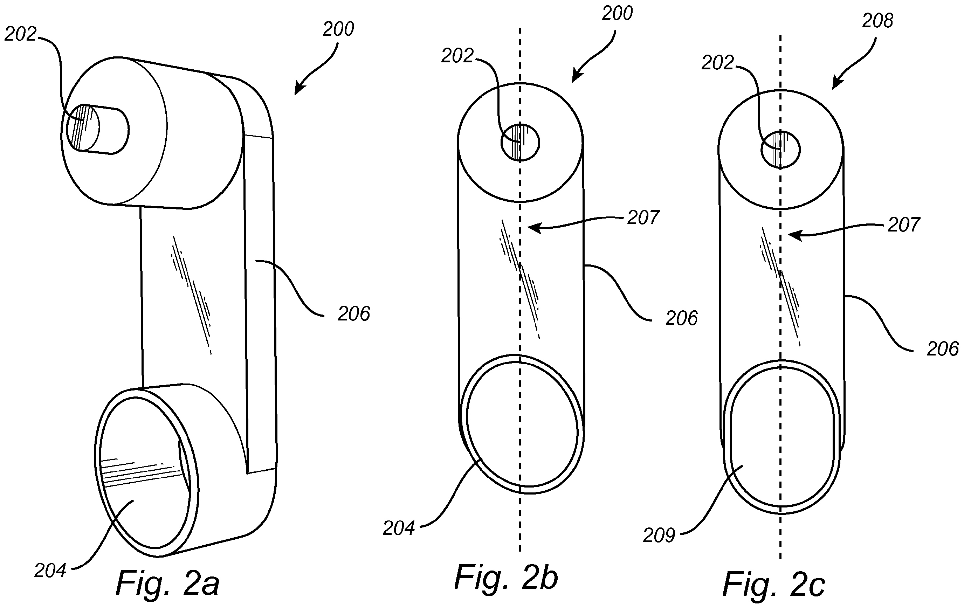

Fig. 2a illustrates an example inspection tool 200 comprising a first fitting element 202 and a second fitting element 204. The first fitting element 202 and the second fitting element 204 are separated by a fixed displacement distance maintained by a cross-member 206 which advantageously provides for a rigid and robust way of maintaining the relative positions of the first fitting element 202 and the second fitting element 204 with respect to each other. The cross-member 206 provides a lateral displacement of the fitting elements 202 and 204 with respect to each other.

Various shapes and configurations are possible for the fitting elements 202 and 204, and generally depend on the present implementation and the configuration of the safety device. However, in this presently described embodiment, the first fitting element 202 is realized by a pin 202 and the second fitting element 204 is a cylindrical hole 204. In this case, the safety device may include, or at least be associated with, a safety device fitting member at a first reference point of the safety device and a second fitting member which is fixed in relation to the second reference point of the safety device. Thus, the second fitting member does not necessarily be part of the safety device, although this is advantageously the case.

As will be described further below, the safety device and the specific implementation at hand are often subject to system tolerances. In order to allow for such tolerances, the second fitting element 204 may be shaped with a tolerance to allow for a tolerable mismatch between the relative positions of the fitting elements 202, 204 and the positions of corresponding safety device fitting members when the safety device is in the un-triggered state.

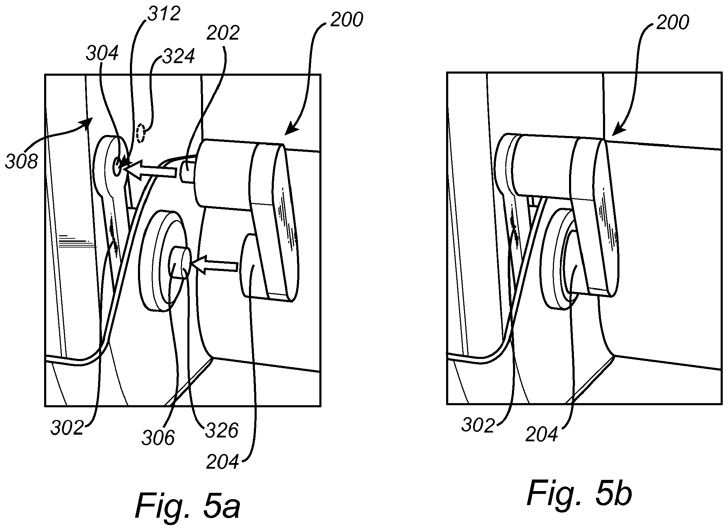

In order to accommodate tolerances the cylindrical hole 204 may have an oblong cross-section as shown in fig. 2b. In this way, in case the second fitting member associated with the second reference point of the safety device is cylindrical, the oblong cross-section allows for some deviation of the second reference point from a nominal reference point. The oblong cross-section is here shown inclined with respect to the axis 207 along the cross-member in order to accommodate for inclined relative locations of the safety device fitting members and their motions in some applications, see for example fig. 5a.

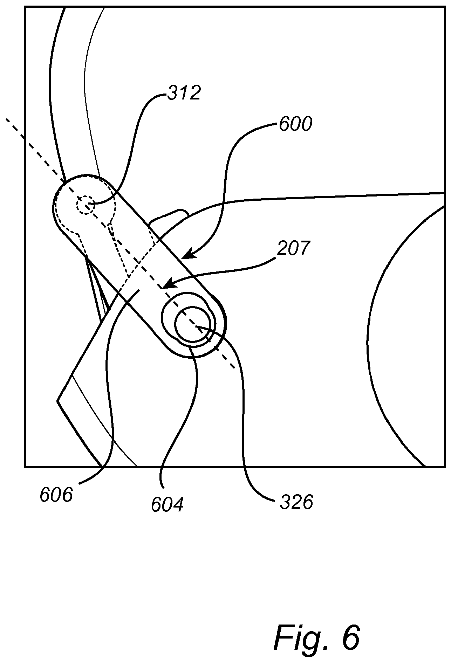

Fig. 2c illustrates a further possible inspection tool 208. In which the second fitting element 209 is shaped as a cylindrical hole with another example oblong cross-section. This oblong cross-section has its longitudinal axis aligned with the axis 207, i.e. with no inclination. This symmetric configuration provides for a more versatile inspection tool, and such configuration will be discussed more with reference to fig. 6.

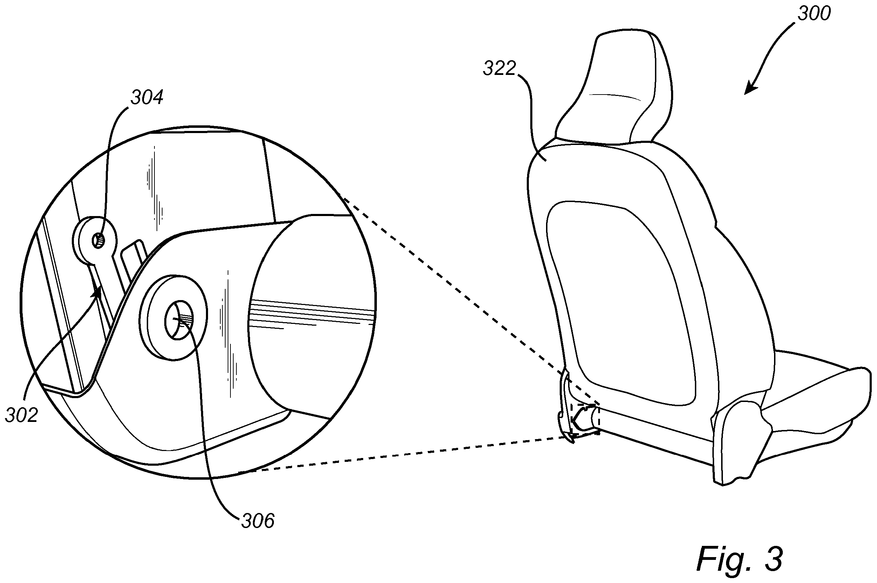

Fig. 3 illustrates one possible implementation for embodiments of the herein disclosed inspection tool. Fig. 3 shows a vehicle seat 300 and a safety device 302 implemented in the vehicle seat 300. The safety device 302 which is only partly visible in fig. 3, is here shown comprised in a whiplash protection system. There are further shown safety device reference points 304 and 306.

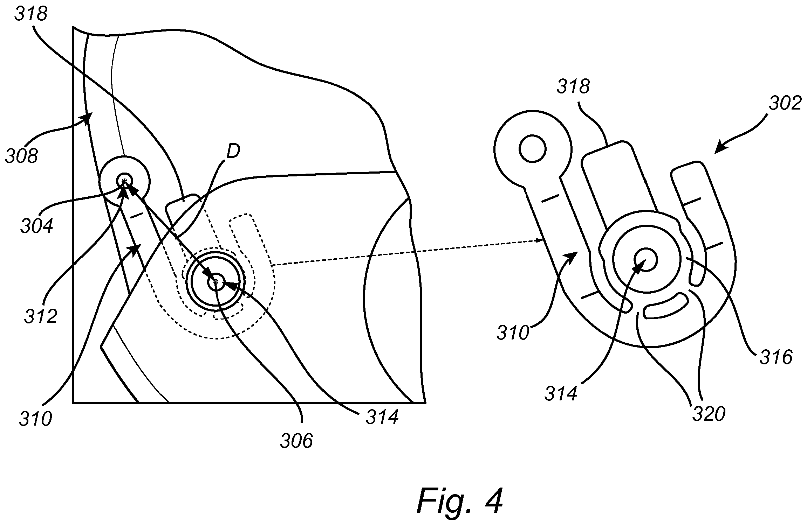

Fig. 4 illustrates the safety device 302 more clearly when it is installed in the vehicle seat 300. The safety device 302 is attached to the so called recliner plate 308 via a first portion 310 of the safety device 302. The first portion 310 may be welded to the recliner plate 308. The first reference point 304 is here exemplified being aligned with the hole 312 in the safety device 302. The second reference point 306 is aligned with the attachment hole 314 for a second portion 316 of the safety device 302. The safety device 302 is attached to the seat chassis via a bolt (not shown) through the attachment hole 314 and the elongated assembly hole 318 in the recliner plate 308. The bolt is often also used for attaching the seat backrest 322 to the seat chassis. In the event of a collision, the deformation elements 320 deform or even disrupt, whereby the vehicle seat backrest 322 (see fig. 3) and the first portion 310 falls downwards. The operation of such whiplash protection systems is generally known to the skilled person. As the deformation elements 320 deform or disrupt, the relative locations of the reference points 304 and 306 is altered and therefore also the distance D between the reference points 304 and 306.

Fig. 5a and fig. 5b conceptually illustrates use of an inspection tool 200 to inspect the status of the safety device 302. The inspection tool 200 here comprises a first fitting element 202 being provided as a pin and a second fitting element 204 being provided as a cylindrical oblong hole (not shown), for example as shown in figs 2a-c. The first reference point for the safety device 302 is the hole 312 of the safety device itself. However, the first reference point may equally well be a hole or another indicator on the back rest 322 of the vehicle seat as long as the indicator follows the motion of the vehicle seat backrest 322 when the safety device is collapsed due to it being triggered. For example, the dashed circle 324 indicates another possible location for the first reference point, herein indicated in the recliner plate.

The second reference point 306 is the location of the bolt 326 which is configured to attach the seat backrest 322 and the safety device 302 to the seat chassis.

Fig. 5b shows that the first fitting element 202 matches the location of the first reference point 304 of the safety device 302 and that the second fitting element 204 matches the location of the second reference point 306 of the safety device 302. It can thus be concluded that the safety device has not been triggered.

As was mentioned with reference to figs. 2b-c the second fitting element may be shaped to allow for tolerances. Fig. 6 illustrates another example of an inspection tool 600 where the second fitting element 604 is shaped with a tolerance to allow for a tolerable mismatch between the relative positions of the fitting elements and the positions of the corresponding safety device fitting members when the safety device 600 is in the un-triggered state.

The second fitting element 604 is here shown as a through-hole in the cross-member 606. The location of the second fitting element 604 is configured match with the position of the bolt 326 as described with reference to figs 5a-b, i.e. simultaneously as the position of the first fitting member 312 of the inspection tool matches the first reference point of the safety device. However, due to positional and geometrical tolerances for e.g. the bolt 326, and the hole 312 at the first reference point 304 and any further components in the vehicle seat, the inspection tool advantageously may be adapted to accommodate for such tolerances.

Fig. 6 illustrates one example embodiment where the second fitting element 604 is an oblong hole 604. The oblong hole allows for a small deviation in the relative positions of the bolt 326 and the second reference point, e.g. the hole 312 in the safety device. The oblong hole in fig. 6 is wider on one side in order to accommodate for inclined relative locations of the safety device fitting members. The oblong hole in fig. 6 is symmetric with respect to the axis 207 along the cross-member 606 such that the safety device can be used on both left and right side of the seat, i.e. to inspect the status of a safety device arranged on either one of the left and the right side of the seat.

Other possible implementation for allowing a small deviation in the relative positions of the bolt 326 and the second reference point may be to make the second fitting element an elliptic hole.

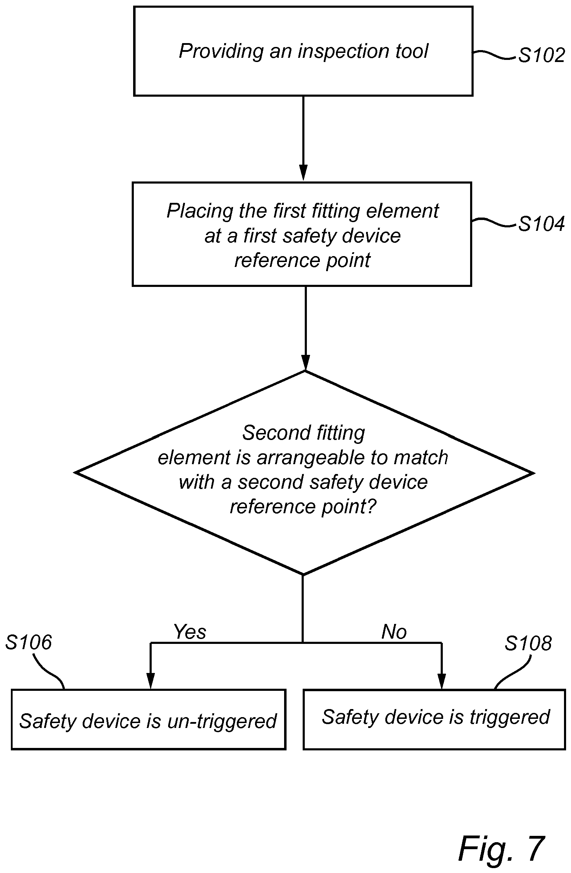

Fig. 7 is a flow-chart of method steps according to example embodiments of the present disclosure. Firstly S102 an inspection tool is provided comprising a first fitting element and a second fitting element arranged with a predetermined relative displacement relative each other.

In subsequent step S104 the first fitting element is placed at a first safety device reference point. In possible implementations the first fitting member is engaged with a first safety device fitting member associated with or located at the first reference point. Next, the second fitting element is attempted to be arranged in a matching location with a second safety device reference point while maintaining the first fitting element in place at the first safety device reference point.

If the second fitting element is arrangeable to simultaneously match with a second safety device reference point, the safety device is determined to be in an un-triggered state in step S106. In one possible implementation the second fitting element should be engageable with a second safety device fitting member while maintaining the first fitting element engaged with the first safety device fitting member if the safety device is in the un-triggered state.

If the second fitting element is not arrangeable to match with the second safety device reference point while maintaining the first fitting element in place at the first safety device reference point, the safety device is determined to be in a triggered state in step S108.

According to the above, in one possible embodiment, engaging the first fitting member with a first safety device fitting member; and determining that the safety device is un-triggered if the second fitting element is engageable with a second safety device fitting member while maintaining the first fitting element engaged with the first safety device fitting member.

The inspection tool is preferably made from a rigid material such as a metal or a rigid plastic.

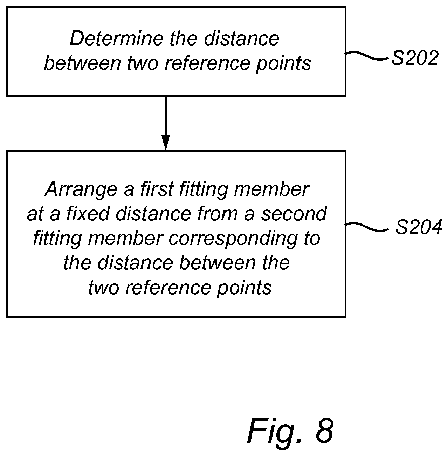

There is further provided a method for manufacturing an inspection device adapted for inspecting the status of a safety device which is adapted to be triggered by stress exceeding a threshold. Method steps for this is illustrates in fig. 8, where in step S202 the distance between two reference points that are fixed as long as the safety device is in an un-triggered state is determined. Subsequently S204, arranging a first fitting member at a fixed distance from a second fitting member corresponding to the distance between the two reference points. The distance between the fitting members match the distance between the two reference points of the safety device when the safety device is in the un-triggered state.

The person skilled in the art realizes that the present invention by no means is limited to the preferred embodiments described above. On the contrary, many modifications and variations are possible within the scope of the appended claims.

For example, the safety device is mainly described with reference to a whiplash protection system. However, other applications are equally applicable where the alteration of two reference points can be used for determining the state of the safety device.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. An arrangement comprising:
a whiplash protection system comprising a safety device (110, 302); and
an inspection tool (100, 200, 208, 600) for inspecting the status of the safety device (110, 302) which is adapted to be triggered by stress exceeding a threshold, wherein the safety device is adapted to be comprised in a vehicle seat, the inspection tool is configured to work together with the safety device, wherein the inspection tool comprising:
- a first fitting element (102, 202) and a second fitting element (104, 204) arranged with a predetermined fixed relative displacement relative each other, wherein the relative positions of the fitting elements are configured to simultaneously match with corresponding first (106, 304) and second (108, 306) safety device reference points when the safety device is in an un-triggered state, wherein the relative positions of the fitting elements are configured to simultaneously match with corresponding two safety device reference points only when the safety device is in an un-triggered state, wherein the relative positions of the fitting elements are configured to not match with the corresponding two safety reference points when the safety device has been triggered,
wherein the positions of the two safety device reference points relative each other are configured to be altered when the safety device has been triggered by a stress exceeding the threshold.

2. The inspection tool according to claim 1, wherein the predetermined displacement is fixed by a cross-member configured to maintain the relative positions of the fitting elements, wherein the first fitting element and the second fitting element are attached to the cross-member.

3. The inspection tool according to any one of the preceding claims, wherein the first fitting element is adapted to match a safety device fitting member (312) at the first reference point of the safety device and the second fitting element is adapted to match a second fitting member (326) which is fixed in relation to the second reference point of the safety device.

4. The inspection tool according to claim 3, wherein the first fitting element is a pin (202) and the second fitting element is a cylindrical hole (204, 209, 604).

5. The inspection tool according to any one of claims 3 and 4, wherein the second fitting element is shaped with a tolerance to allow for a tolerable mismatch between the relative positions of the fitting elements and the positions of the corresponding safety device fitting members when the safety device is in the un-triggered state.

6. The inspection tool according to claim 5, wherein the second fitting element is a cylindrical hole with an oblong cross-section to allow for the tolerance.

7. The inspection tool according to claim 6, wherein the oblong cross-section is wider on one side than on the other side.

8. The inspection tool according to claim 1 and any one of claims 3 to 7, wherein the second fitting member is a bolt (326) configured to attach a vehicle seat backrest to a seat chassis.

9. The inspection tool according to claim 8, wherein the inspection tool is configured for inspecting the status of the safety device without removing the vehicle seat from the vehicle.

10. A method for inspecting a safety device (110, 302) adapted to be triggered by stress exceeding a threshold, wherein the safety device is comprised in a whiplash protection system in a vehicle seat, wherein the positions of two safety device reference points relative each other are configured to be altered when the safety device has been triggered by a stress exceeding a threshold, the method comprises:
- providing an inspection tool (100, 200, 208, 600) configure to work together with the safety device, the inspection tool comprising a first fitting element (102, 202) and a second fitting element (104, 204) arranged with a predetermined relative displacement relative each other;
- placing the first fitting element at a first safety device reference point (106, 304);
- determining that the safety device is un-triggered if the second fitting element is arrangeable to match with a second safety device reference point (108, 306) while maintaining the first fitting element in place at the first safety device reference point, and
- determining that the safety device has been triggered if the second fitting element is not arrangeable to match with the second safety device reference point while maintaining the first fitting element in place at the first safety device reference point.

11. A method for manufacturing an inspection tool adapted for inspecting the status of a safety device (110) of a whiplash protection system, said safety device (110) being adapted to be triggered by stress exceeding a threshold, said inspection tool comprising a first and a second fitting member, the manufacturing method comprising:
- determining (S202) on the safety device of the whiplash system the distance between two reference points of the safety device that are fixed as long as the safety device is in an un-triggered state; and
- arranging (S204) the first fitting member (102, 202) at a fixed distance from the second fitting member (104, 204) corresponding to the distance between the two reference points, wherein the distance between the fitting members match the distance between the two reference points of the safety device when the safety device is in the un-triggered state.

## Patentansprüche

1. Anordnung, umfassend:
ein Schleudertrauma-Schutzsystem, das eine Sicherheitsvorrichtung (110, 302) umfasst,
ein Inspektionswerkzeug (100, 200, 208, 600) zum Inspizieren des Status der Sicherheitsvorrichtung (110, 302), die dazu ausgeführt ist, von einer eine Schwelle überschreitenden Beanspruchung ausgelöst zu werden, wobei die Sicherheitsvorrichtung dazu ausgeführt ist, in einem Fahrzeugsitz aufgenommen zu sein, wobei das Inspektionswerkzeug zum Zusammenwirken mit der Sicherheitsvorrichtung ausgestaltet ist, wobei das Inspektionswerkzeug Folgendes umfasst:
- ein erstes Montierelement (102, 202) und ein zweites Montierelement (104, 204), die mit einer vorbestimmten festgelegten Relativverschiebung bezüglich einander angeordnet sind, wobei die relativen Positionen der Montierelemente dazu ausgestaltet sind, gleichzeitig zu einem entsprechenden ersten (106, 304) und zweiten (108, 306) Sicherheitsvorrichtungsbezugspunkt zu passen, wenn die Sicherheitsvorrichtung in einem nicht ausgelösten Zustand ist, wobei die relativen Positionen der Montierelemente dazu ausgestaltet sind, nur dann gleichzeitig zu entsprechenden zwei Sicherheitsvorrichtungsbezugspunkten zu passen, wenn die Sicherheitsvorrichtung in einem nicht ausgelösten Zustand ist, wobei die relativen Positionen der Montierelemente dazu ausgestaltet sind, nicht zu entsprechenden zwei Sicherheitsbezugspunkten zu passen, wenn die Sicherheitsvorrichtung ausgelöst worden ist,
wobei die Positionen der beiden Sicherheitsvorrichtungsbezugspunkte bezüglich einander dazu ausgestaltet sind geändert zu werden, wenn die Sicherheitsvorrichtung durch eine die Schwelle überschreitende Beanspruchung ausgelöst worden ist.

2. Inspektionswerkzeug nach Anspruch 1, wobei die vorbestimmte Verschiebung durch ein Querglied festgelegt wird, das dazu ausgestaltet ist, die relativen Positionen der Montierelemente aufrechtzuerhalten, wobei das erste Montierelement und das zweite Montierelement an dem Querglied angebracht sind.

3. Inspektionswerkzeug nach einem der vorhergehenden Ansprüche, wobei das erste Montierelement dazu ausgeführt ist, an dem ersten Bezugspunkt der Sicherheitsvorrichtung zu einem Sicherheitsvorrichtungsmontageglied (312) zu passen, und das zweite Montierelement dazu ausgeführt ist, zu einem zweiten Montierelement (326) zu passen, das bezüglich des zweiten Bezugspunkts der Sicherheitsvorrichtung festgelegt ist.

4. Inspektionswerkzeug nach Anspruch 3, wobei das Montierelement ein Stift (202) und das zweite Montierelement ein zylindrisches Loch (204, 209, 604) ist.

5. Inspektionswerkzeug nach einem der Ansprüche 3 und 4, wobei das zweite Montierelement mit einer Toleranz gestaltet ist, um eine tolerierbare Fehlpassung zwischen den relativen Positionen der Montierelemente und den Positionen der entsprechenden Sicherheitsvorrichtungmontierglieder zu gestatten, wenn die Sicherheitsvorrichtung in dem nicht ausgelösten Zustand ist.

6. Inspektionswerkzeug nach Anspruch 5, wobei das zweite Montierelement ein zylindrisches Loch mit einem länglichen Querschnitt ist, um die Toleranz zu gestatten.

7. Inspektionswerkzeug nach Anspruch 6, wobei der längliche Querschnitt an einer Seite breiter als an der anderen Seite ist.

8. Inspektionswerkzeug nach Anspruch 1 und nach einem der Ansprüche 3 bis 7, wobei das zweite Montierelement ein Bolzen (326) ist, der zum Anbringen einer Fahrzeugsitzrückenlehne an einem Sitzgestell ausgestaltet ist.

9. Inspektionswerkzeug nach Anspruch 8, wobei das Inspektionswerkzeug zur Inspektion des Status der Sicherheitsvorrichtung ohne Entfernen des Fahrzeugsitzes aus dem Fahrzeug ausgestaltet ist.

10. Verfahren zum Inspizieren einer Sicherheitsvorrichtung (110, 302), die dazu ausgeführt ist, durch eine Schwelle überschreitende Beanspruchung ausgelöst zu werden, wobei die Sicherheitsvorrichtung in einem Schleudertrauma-Schutzsystem in einem Fahrzeugsitz aufgenommen ist, wobei die Positionen von zwei Sicherheitsvorrichtungsbezugspunkten zueinander jeweils dazu ausgestaltet sind geändert zu werden, wenn die Sicherheitsvorrichtung durch eine eine Schwelle überschreitende Beanspruchung ausgelöst worden ist, wobei das Verfahren Folgendes umfasst:
- Bereitstellen eines Inspektionswerkzeugs (100, 200, 208, 600), das zum Zusammenwirken mit der Sicherheitsvorrichtung ausgestaltet ist, wobei das Inspektionswerkzeug ein erstes Montierelement (102, 202) und ein zweites Montierelement (104, 204) umfasst, die mit einer vorbestimmten Relativverschiebung bezüglich einander angeordnet sind,
- Platzieren des ersten Montierelements an einen ersten Sicherheitsvorrichtungsbezugspunkt (106, 304),
- Bestimmen, dass die Sicherheitsvorrichtung nicht ausgelöst ist, wenn das zweite Montierelement so angeordnet werden kann, dass es zu einem zweiten Sicherheitsvorrichtungsbezugspunkt (108, 306) passt, während das erste Montierelement an dem ersten Sicherheitsvorrichtungsbezugspunkt an Ort und Stelle gehalten wird, und
- Bestimmen, dass die Sicherheitsvorrichtung ausgelöst worden ist, wenn das zweite Montierelement nicht so angeordnet werden kann, dass es zu dem zweiten Sicherheitsvorrichtungsbezugspunkt passt, während das erste Montierelement an dem ersten Sicherheitsvorrichtungsbezugspunkt an Ort und Stelle gehalten wird.

11. Verfahren zur Herstellung eines Inspektionswerkzeugs, das zum Inspizieren des Status einer Sicherheitsvorrichtung (110) eines Schleudertrauma-Schutzsystems ausgeführt ist, wobei die Sicherheitsvorrichtung (110) dazu ausgeführt ist, durch eine Schwelle überschreitende Beanspruchung ausgelöst zu werden, wobei das Inspektionswerkzeug ein erstes und ein zweites Montierelement umfasst, wobei das Herstellungsverfahren Folgendes umfasst:
- Bestimmen (S202) an der Sicherheitsvorrichtung des Schleudertrauma-Schutzsystems des Abstands zwischen zwei Bezugspunkten der Sicherheitsvorrichtung, der so lange festliegt, wie die Sicherheitsvorrichtung in einem nicht ausgelösten Zustand ist, und
- Anordnen (S204) des ersten Montierelements (102, 202) in einem festgelegten Abstand von dem zweiten Montierelement (104, 204), der dem Abstand zwischen den beiden Bezugspunkten entspricht, wobei der Abstand zwischen den Montierelementen zu dem Abstand zwischen den beiden Bezugspunkten der Sicherheitsvorrichtung passt, wenn die Sicherheitsvorrichtung in dem nicht ausgelösten Zustand ist.

## Revendications

1. Structure comprenant :
un système de protection contre un coup de fouet cervical comprenant un dispositif de sécurité (110, 302) ; et
un outil d'inspection (100, 200, 208, 600) pour inspecter l'état du dispositif de sécurité (110, 302) qui est propre à être déclenché par un effort dépassant un seuil, le dispositif de sécurité étant propre à faire partie d'un siège de véhicule, l'outil d'inspection étant conçu pour fonctionner conjointement avec le dispositif de sécurité, l'outil d'inspection comprenant :
- un premier élément d'assemblage (102, 202) et un second élément d'assemblage (104, 204) disposés avec un écart relatif fixe prédéterminé l'un par rapport à l'autre, les positions relatives des éléments d'assemblage étant conçues pour concorder simultanément avec des premier (106, 304) et second (108, 306) points de référence de dispositif de sécurité correspondants lorsque le dispositif de sécurité se trouve dans un état non déclenché, les positions relatives des éléments d'assemblage étant conçues pour concorder simultanément avec deux points de référence de dispositif de sécurité correspondants uniquement lorsque le dispositif de sécurité se trouve dans un état non déclenché, les positions relatives des éléments d'assemblage étant conçues pour ne pas concorder avec deux points de référence de dispositif de sécurité correspondants lorsque le dispositif de sécurité a été déclenché,
les positions des deux points de référence de dispositif de sécurité l'une par rapport à l'autre étant conçues pour être modifiées lorsque le dispositif de sécurité a été déclenché par un effort dépassant le seuil.

2. Outil d'inspection selon la revendication 1, dans lequel l'écart prédéterminé est fixé par une traverse conçue pour maintenir les positions relatives des éléments d'assemblage, dans lequel le premier élément d'assemblage et le second élément d'assemblage sont attachés à la traverse.

3. Outil d'inspection selon l'une quelconque des revendications précédentes, dans lequel le premier élément d'assemblage est propre à concorder avec un élément d'assemblage de dispositif de sécurité (312) au niveau du premier point de référence du dispositif de sécurité et le second élément d'assemblage est propre à concorder avec un second élément d'assemblage (326) qui est fixe relativement au second point de référence du dispositif de sécurité.

4. Outil d'inspection selon la revendication 3, dans lequel le premier élément d'assemblage est une cheville (202) et le second élément d'assemblage est un trou cylindrique (204, 209, 604).

5. Outil d'inspection selon l'une quelconque des revendications 3 et 4, dans lequel le second élément d'assemblage est façonné avec une certaine tolérance afin de permettre une discordance tolérable entre les positions relatives des éléments d'assemblage et les positions des éléments d'assemblage de dispositif de sécurité correspondants lorsque le dispositif de sécurité se trouve dans l'état non déclenché.

6. Outil d'inspection selon la revendication 5, dans lequel le second élément d'assemblage est un trou cylindrique présentant une section transversale oblongue pour permettre la tolérance.

7. Outil d'inspection selon la revendication 6, dans lequel la section transversale oblongue est plus large sur un côté que sur l'autre côté.

8. Outil d'inspection selon la revendication 1 et l'une quelconque des revendications 3 à 7, dans lequel le second élément d'assemblage est un boulon (326) conçu pour attacher un dossier de siège de véhicule à un châssis de siège.

9. Outil d'inspection selon la revendication 8, l'outil d'inspection étant conçu pour inspecter l'état du dispositif de sécurité sans enlever le siège de véhicule du véhicule.

10. Procédé d'inspection d'un dispositif de sécurité (110, 302) propre à être déclenché par un effort dépassant un seuil, le dispositif de sécurité faisant partie d'un système de protection contre un coup de fouet cervical dans un siège de véhicule, dans lequel les positions de deux points de référence de dispositif de sécurité l'une par rapport à l'autre sont conçues pour être modifiées lorsque le dispositif de sécurité a été déclenché par un effort dépassant un seuil, le procédé comprenant :
- préparer un outil d'inspection (100, 200, 208, 600) conçu pour fonctionner conjointement avec le dispositif de sécurité, l'outil d'inspection comprenant un premier élément d'assemblage (102, 202) et un second élément d'assemblage (104, 204) disposés avec un écart relatif prédéterminé l'un par rapport à l'autre ;
- placer le premier élément d'assemblage au niveau d'un premier point de référence de dispositif de sécurité (106, 304) ;
- déterminer que le dispositif de sécurité n'a pas été déclenché si le second élément d'assemblage peut être disposé de sorte qu'il concorde avec un second point de référence de dispositif de sécurité (108, 306) tout en maintenant le premier élément d'assemblage en place au niveau du premier point de référence de dispositif de sécurité, et
- déterminer que le dispositif de sécurité a été déclenché si le second élément d'assemblage ne peut pas être disposé de sorte qu'il concorde avec le second point de référence de dispositif de sécurité tout en maintenant le premier élément d'assemblage en place au niveau du premier point de référence de dispositif de sécurité.

11. Procédé de fabrication d'un outil d'inspection approprié pour l'inspection de l'état d'un dispositif de sécurité (110) d'un système de protection contre un coup de fouet cervical, ledit dispositif de sécurité (110) étant propre à être déclenché par un effort dépassant un seuil, ledit outil d'inspection comprenant des premier et second éléments d'assemblage, le procédé de fabrication comprenant :
- déterminer (S202), sur le dispositif de sécurité du système anti-coup de fouet cervical, la distance entre deux points de référence du dispositif de sécurité qui sont fixes tant que le dispositif de sécurité se trouve dans un état non déclenché ; et
- disposer (S204) le premier élément d'assemblage (102, 202) à une distance fixe du second élément d'assemblage (104, 204) correspondant à la distance entre les deux points de référence, la distance entre les éléments d'assemblage concordant avec la distance entre les deux points de référence du dispositif de sécurité lorsque le dispositif de sécurité se trouve dans l'état non déclenché.
